# FASCICULE DE BREVET EUROPEEN

(11) **EP 3 453 950 B1**
(45) Date de publication et mention de la délivrance du brevet: **19.02.2020**
(21) Numéro de dépôt: 18191996.0
(22) Date de dépôt: 31.08.2018
(51) Int. Cl.: F21S 41/29, F21V 17/16

(54) **MODULE OPTIQUE POUR DISPOSITIF D'ECLAIRAGE ET/OU DE SIGNALISATION LUMINEUSE**
OPTISCHES MODUL FÜR BELEUCHTUNGS- UND/ODER SIGNALISIERUNGSVORRICHTUNG
OPTICAL MODULE FOR A LIGHTING AND/OR SIGNALLING DEVICE

(30) Priorité: 12.09.2017 FR 1758399
(43) Date de publication de la demande: 13.03.2019
(73) Titulaire: PSA Automobiles SA, 78300 Poissy (FR)
(72) Inventeur: PERON, Rodolphe, 95220 HERBLAY (FR)

(56) Documents cités:
- EP-A1- 2 202 459
- EP-A1- 2 998 647
- EP-A2- 2 796 772
- FR-A1- 2 965 039
- US-B1- 9 033 563

## Description

L'invention concerne, de façon générale, les dispositifs d'éclairage et/ou de signalisation lumineuse, destinés plus particulièrement aux véhicules automobiles. L'invention vise plus précisément un module optique d'un dispositif d'éclairage et/ou de signalisation lumineuse.

De manière connue, un dispositif d'éclairage et/ou de signalisation lumineuse est disposé à l'avant et à l'arrière d'un véhicule automobile afin, d'une part, d'éclairer la route pour améliorer la visibilité du conducteur du véhicule, notamment en condition nocturne, et/ou, d'autre part, de signaler la position du véhicule aux autres usagers de la route. En pratique, un tel dispositif comprend principalement les feux de position, les feux de croisement et les feux de route, formant une pluralité de modules optiques dont les différentes intensités lumineuses permettent d'adapter l'éclairage aux conditions extérieures. Pour ce faire, le dispositif d'éclairage et/ou de signalisation lumineuse comprend une pluralité de sources lumineuses, chacune étant intégrée dans un module optique.

De nos jours, les différentes sources lumineuses se présentent sous la forme d'une pluralité de diodes électroluminescentes, connues sous la désignation de DEL ou LED signifiant « light-emitting diode » en langue anglaise. De telles diodes électroluminescentes, intégrées chacune à un module optique, sont montées à l'intérieur d'un boîtier, désigné « bloc optique », dont la face avant est fermée de manière étanche par une paroi transparente, afin de permettre à la lumière émise par les sources lumineuses d'être orientée vers l'extérieur du véhicule. Une telle paroi transparente permet en outre de protéger les sources lumineuses des conditions extérieures, notamment de la pluie ou de tout objet projeté vers le véhicule.

De manière connue, afin de permettre la diffusion de la lumière suivant une direction et un angle souhaités, chaque module optique comprend en outre une lentille de projection, positionnée devant chaque source lumineuse. Une telle lentille de projection, configurée pour permettre la divergence des faisceaux lumineux émis par la source lumineuse, permet de protéger les autres conducteurs de l'éblouissement, tout en éclairant la route sur une plus grande surface. Pour cela, la lentille de projection est fixée, dans le module optique, en vis-à-vis de chaque source lumineuse.

A ce titre, le document FR 2965039 décrit un module optique d'un dispositif d'éclairage et/ou de signalisation lumineuse comprenant une lentille de projection, un support d'une telle lentille et une source lumineuse, configurée pour projeter un faisceau lumineux au travers de la lentille. Le support, destiné à être fixé à l'intérieur d'un bloc optique, comprend des moyens de fixation de la lentille, de type pion de positionnement. La lentille comprend ainsi des pattes de fixation faisant saillie de ladite lentille et comprenant une pluralité d'orifices, configurés pour coopérer avec les pions de positionnement du support. Cependant, le module optique décrit dans le document FR 2965039 est complexe à installer et de surcroit coûteux, ce qui présente un inconvénient majeur.

Le document EP 2796772 divulgue un module optique selon le préambule de la revendication 1.

De plus, de nos jours, l'aspect esthétique occupe une part importante dans les projets innovants. Notamment concernant les dispositifs d'éclairage et/ou de signalisation lumineuse, un aspect visuel particulier créant une illusion d'optique d'un module optique en sustentation est de plus en plus recherché. L'état de la technique ne permet pas à ce jour d'intégrer un module optique présentant un effet flottant, dans lequel la lentille de projection est fixée de manière simple.

L'invention vise donc à pallier au moins en partie ces inconvénients en proposant un module optique d'un dispositif d'éclairage et/ou de signalisation lumineuse comprenant une lentille de projection configurée pour apporter un effet visuel d'un module optique en sustentation. L'invention vise en particulier une lentille de projection d'un module optique simple et rapide à mettre en place, permettant également de limiter les coûts d'installation.

Plus précisément, pour parvenir à ce résultat, la présente invention concerne un module optique pour dispositif d'éclairage et/ou de signalisation lumineuse de véhicule, notamment de véhicule automobile, ledit module optique comprenant un corps principal configuré pour recevoir une source lumineuse, et une lentille de projection, ladite lentille de projection comprenant une face avant, apte à permettre la diffusion d'une lumière émise par ladite source lumineuse vers l'extérieur du véhicule et s'étendant sensiblement selon un plan de diffusion, et au moins une branche latérale, s'étendant selon un plan de branche sécant audit plan de diffusion et comprenant un orifice de fixation, ledit corps principal comprenant au moins un plot de fixation faisant saillie dudit corps principal, caractérisé en ce que ledit plot de fixation présente une forme pyramidale s'étendant d'une base à un sommet, ledit sommet comprenant au moins deux facettes configurées pour assurer le guidage de ladite lentille de projection sur le corps principal et pour permettre la fixation de la lentille de projection au corps principal.

Un tel sommet du plot de fixation comprenant des facettes forme ainsi une pointe-de-diamant, permettant avantageusement d'assurer le guidage de la lentille de projection en facilitant l'insertion du plot de fixation dans les orifices de fixation tout en apportant un visuel esthétique à la fixation de la lentille

De manière avantageuse, ladite au moins une branche latérale présente une longueur comprise entre 20 mm et 40 mm, de préférence 30 mm, de manière à déporter la lentille de projection vers l'avant pour lui donner un effet de sustentation.

Avantageusement, le corps principal comprenant deux plots de fixation, ladite lentille de projection comprend deux branches latérales comprenant chacune un orifice de fixation, de manière à permettre l'insertion de chaque plot de fixation dans un orifice d'une banche latérale de la lentille de projection, permettant de bloquer les mouvements de translation de la lentille de projection.

De manière préférée, ledit corps principal présentant un plan d'appui, le sommet dudit au moins un plot de fixation comprend une facette avant et une facette arrière présentant respectivement un premier angle d'inclinaison par rapport audit plan d'appui compris entre 5° et 15° et un deuxième angle d'inclinaison par rapport audit plan d'appui compris entre 35° et 45°, de manière à assurer le guidage de la lentille de projection sur le corps principal et à faciliter l'insertion dudit au moins un plot de fixation dans ledit au moins un orifice.

De manière avantageuse, ledit au moins un plot de fixation présente une forme pyramidale à quatre côtés, de manière à permettre l'indexage et le maintien de la lentille de projection.

Avantageusement, le corps principal comprenant une encoche, la lentille de projection comprend en outre une patte de maintien, configurée pour s'insérer dans ladite encoche, de manière à bloquer en rotation la lentille de projection.

De préférence, ladite au moins une branche latérale comprend une extrémité présentant un chanfrein, de manière à faciliter le glissement des branches latérales sur les facettes du sommet du plot de fixation.

L'invention concerne également un dispositif d'éclairage et/ou de signalisation lumineuse comprenant un module optique tel que décrit précédemment.

L'invention concerne en outre un véhicule automobile comprenant un dispositif d'éclairage et/ou de signalisation lumineuse tel que décrit précédemment.

Enfin, l'invention porte sur un procédé de fixation d'une lentille de projection sur un corps principal d'un module optique d'un dispositif d'éclairage et/ou de signalisation lumineuse, ledit corps principal comprenant au moins un plot de fixation, ladite lentille de projection comprenant au moins une branche latérale, comprenant un orifice de fixation et un chanfrein, et une patte de maintien, ledit procédé comprenant les étapes de :
- coulissement de ladite au moins une branche latérale le long dudit corps principal,
- écartement de ladite au moins une branche latérale sur ledit au moins plot de fixation,
- glissement dudit chanfrein sur une facette avant du sommet du plot de fixation,
- glissement du chanfrein sur une facette arrière du sommet du plot de fixation,
- insertion dudit au moins un plot de fixation dans ledit orifice de fixation de ladite au moins une branche latérale, et
- insertion de ladite patte de maintien dans une encoche du corps principal.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, une représentation schématique d'un véhicule automobile et du repère de définition d'un tel véhicule,
- la figure 2, une représentation schématique d'un dispositif d'éclairage et/ou de la signalisation lumineuse du véhicule de la figure 1,
- la figure 3, une représentation schématique de trois modules optiques du dispositif d'éclairage et/ou de la signalisation lumineuse de la figure 2, selon une forme de réalisation préférée de l'invention,
- la figure 4, une représentation schématique d'un plot de fixation d'un corps principal du module optique de la figure 3,
- la figure 5, une vue en coupe du plot de fixation de la figure 4,
- la figure 6, une représentation schématique d'une encoche d'un corps principal d'un module optique de la figure 3,
- la figure 7, une représentation schématique d'une lentille de projection d'un module optique de la figure 3,
- la figure 8, une représentation schématique d'une patte de maintien d'une lentille de projection de la figure 7, et
- la figure 9, un schéma bloc des étapes d'un procédé de fixation d'une lentille de projection sur un corps principal d'un bloc optique selon un mode de réalisation de l'invention.

Dans ce qui va suivre, les formes de réalisation décrites s'attachent plus particulièrement à une installation du module optique selon l'invention au sein d'un véhicule automobile. Cependant toute installation dans un contexte différent, en particulier pour tout type de véhicule, est également visée par la présente invention.

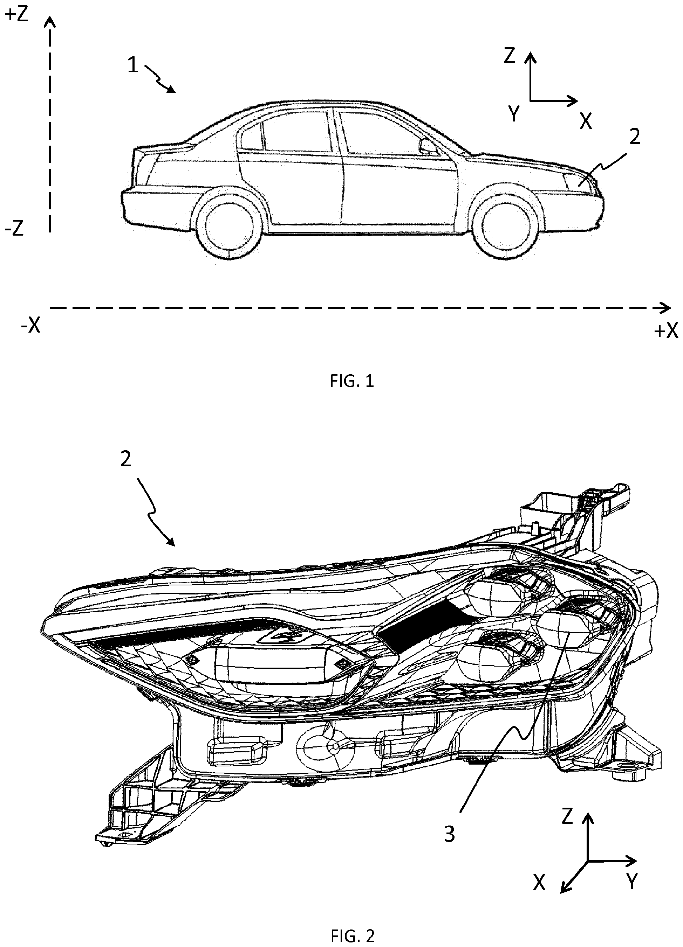

De manière connue, un véhicule 1 automobile comprend une pluralité de dispositifs d'éclairage et/ou de signalisation lumineuse, désignés dispositif d'éclairage 2, montés à l'avant et à l'arrière du véhicule 1. En référence à la figure 1, un tel véhicule 1 s'étend longitudinalement selon un axe X, verticalement selon un axe Z et transversalement selon un axe Y, de manière à former un repère orthogonal (X, Y, Z). Ainsi par le terme horizontal, on entend un objet s'étendant dans le plan (X, Y) et par le terme vertical, un objet s'étendant dans le plan (Y, Z). De plus, l'avant du dispositif d'éclairage 2 est défini en référence à la direction +X de l'axe longitudinal X du véhicule 1 et l'arrière du dispositif d'éclairage 2 à la direction -X. En outre, les termes « supérieur » et « inférieur », définis par rapport à l'axe vertical Z du véhicule 1, font respectivement référence à la direction +Z et à la direction -Z d'un tel axe vertical Z.

La figure 2 présente un dispositif d'éclairage 2, monté dans un véhicule 1 automobile, et plus précisément en l'espèce, un dispositif d'éclairage 2 avant. La figure 2 présente plus particulièrement un dispositif d'éclairage 2 avant comprenant une pluralité de modules optiques 3, selon une forme de réalisation préférée de l'invention.

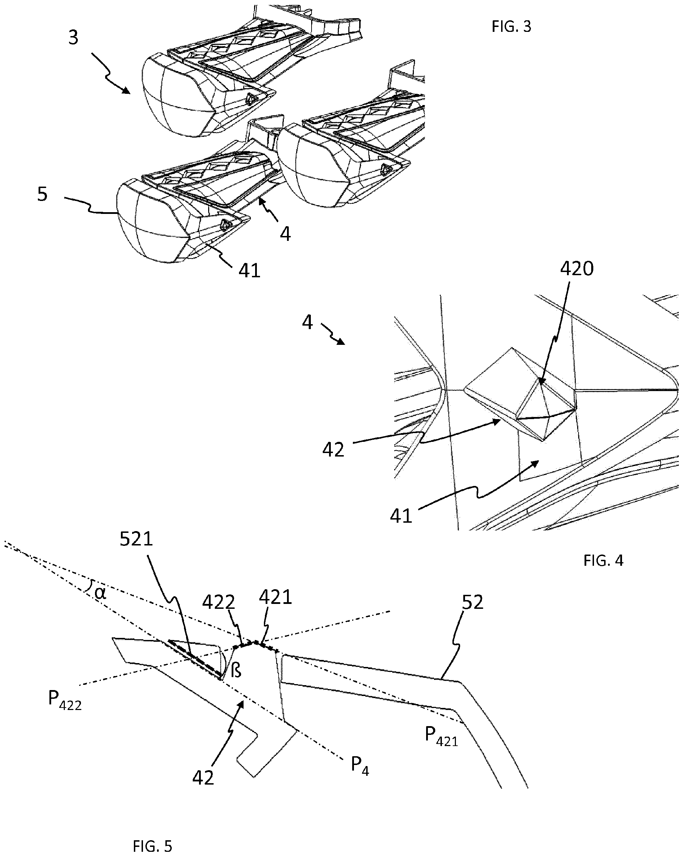

Un tel module optique 3 comprend dans cet exemple, en référence à la figure 3, un corps principal 4 et une lentille de projection 5, montée en vis-à-vis d'une source lumineuse (non représentée). Une telle source lumineuse se présente par exemple sous la forme d'une diode électroluminescente, connue sous la désignation de DEL ou LED signifiant « light-emitting diode » en langue anglaise. Le corps principal 4 est ainsi configuré pour recevoir une telle diode électroluminescente, adaptée pour émettre un faisceau lumineux.

En référence aux figures 4 et 5, le corps principal 4, configuré pour être fixé à l'intérieur du dispositif d'éclairage 2, est réalisé de préférence dans un matériau thermoplastique. Un tel corps principal 4 comprend une base 41, formant un plan d'appui P₄ configuré pour permettre le calage de la lentille de protection 5 comme cela sera décrit plus en détails par la suite.

Le corps principal 4 comprend en outre dans cet exemple deux plots de fixation 42 (dont un seul est représenté sur les figures 4 et 5) faisant saillie du corps principal 4. Deux tels plots de fixation 42 sont de préférence latéralement opposés sur le corps principal 4, de manière à assurer une répartition des efforts dans le corps principal 4 et à permettre une fixation stable de la lentille de projection 5.

Chaque plot de fixation 42 présente une forme pyramidale à quatre côtés, configurée pour assurer à la fois le maintien en place de la lentille de projection 5 et son indexage lors du montage du module optique 3. Une telle forme pyramidale s'étend depuis la base 41 du corps principal 4 jusqu'à un sommet 420 du plot de fixation 42. Dans cet exemple, la forme pyramidale du plot de fixation 42 comprend quatre côtés, cependant il va de soi que le plot de fixation 42 pourrait tout aussi bien en comprendre un nombre différents, par exemple trois ou six côtés.

De manière préférée, le sommet 420 du plot de fixation 42 comprend une pluralité de facettes 421, 422, dans cet exemple quatre facettes, configurées pour assurer le guidage de la lentille de projection 5 sur le plot de fixation 42. Une telle pluralité de facettes 421, 422 confère au sommet 420 du plot de fixation 42 une forme de pointe-de-diamant, apportant également un aspect esthétique. Dans cet exemple, le sommet 420 en pointe-de-diamant comprend quatre facettes, cependant il va de soi que le sommet 420 du plot de fixation 42 pourrait tout aussi bien en comprendre un nombre différent, par exemple trois ou six facettes.

Comme représenté sur la figure 5, le sommet 420 du plot de fixation 42 comprend ainsi une facette avant 421 et une facette arrière 422, configurées pour assurer le guidage de la lentille de projection 5 lors de la fixation de cette dernière au corps principal 4. Pour cela, la facette avant 421 s'étend selon un plan avant P₄₂₁ configuré pour former un angle avec le plan d'appui P₄ du corps principal 4, désigné premier angle d'inclinaison α et étant compris entre 35 ° et 45 °, de préférence 40 °. De manière similaire, la facette arrière 422 s'étend selon un plan arrière P₄₂₂, configuré pour former un angle avec le plan d'appui P₄ du corps principal 4, désigné deuxième angle d'inclinaison β et étant compris entre 5 ° et 15 °, de préférence 10 °. De tels angles d'inclinaison α, β permettent avantageusement de faciliter l'insertion de la lentille de projection 5 dans les plots de fixation 42, comme cela sera décrit plus en détails par la suite.

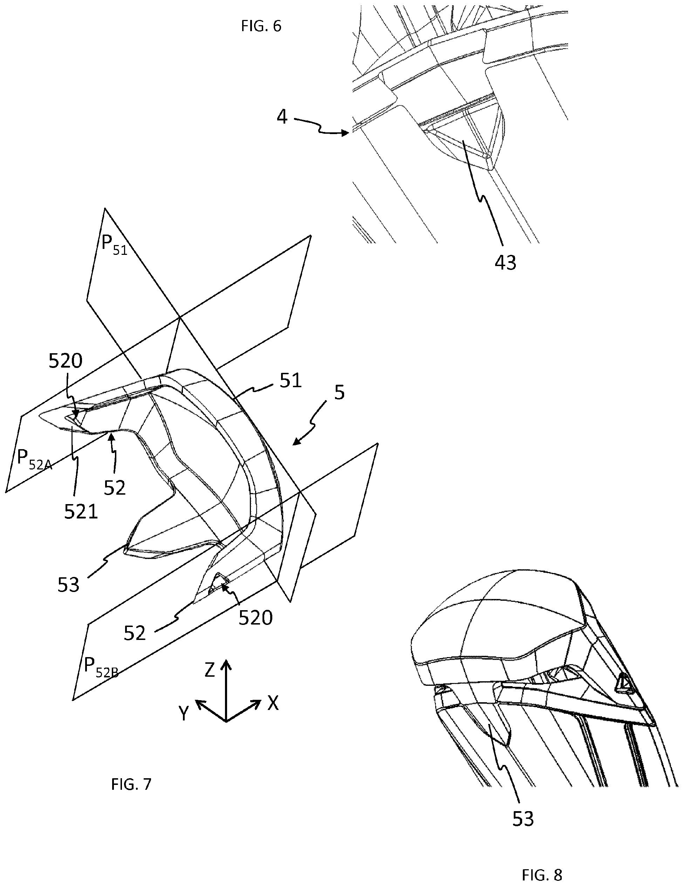

En référence à la figure 6, le corps principal 4 comprend en outre, sur une surface inférieure, une encoche 43 présentant la forme d'un « V » et configurée pour permettre la mise en contrainte d'une patte de maintien 53 de la lentille de projection 5 lors de la fixation de ladite lentille de projection 5 sur le corps principal 4, de manière à absorber les vibrations des mouvements dus par exemple au véhicule 1 en fonctionnement.

La lentille de projection 5, par exemple en matériau Polycarbonate, est configurée pour être fixée au corps principal 4 de manière déportée vers l'avant, afin d'apporter l'illusion que la lentille de projection 5 est en sustentation dans le dispositif d'éclairage 2.

Pour cela, en référence à la figure 7, la lentille de projection 5 comprend une face avant 51, configurée pour laisser passer le faisceau lumineux provenant de la source lumineuse et pour permettre la diffusion d'un tel faisceau lumineux vers l'avant du véhicule 1. Une telle face avant 51, définie selon l'avant du dispositif d'éclairage 2, s'étend selon une surface assimilable à un plan désigné plan de diffusion P₅₁. Lorsque la lentille de projection 5 est montée dans le dispositif d'éclairage 2, un tel plan de diffusion P₅₁ est alors sensiblement vertical.

Dans cet exemple, la lentille de projection 5 comprend en outre deux banches latérales 52, configurées pour permettre la fixation de la lentille de projection 5 sur le corps principal 4. Chaque branche latérale 52, intégrée à la lentille de projection 5 et reliée à un bord latéral de la face avant 51, s'étend selon un plan, désigné plan de branche P_{52A}, P_{52B}, sécant au plan de diffusion P₅₁. Dans cet exemple, une première branche latérale 52 s'étend ainsi selon un premier plan de branche P_{52A} et la deuxième branche latérale 52, selon un deuxième plan de branche P_{52B}. De préférence, chaque plan de branche P_{52A}, P_{52B}, forme avec le plan de diffusion P₅₁, un angle compris entre 90 ° et 100 °, de préférence 95 °. Les branches latérales 52 sont ainsi sensiblement perpendiculaires à la face avant 51 de la lentille de projection 5. Dans cet exemple, la lentille de projection 5 comprend deux branches latérales 52, cependant il va de soi que la lentille de projection 5 pourrait en comprend un nombre différent, par exemple quatre branches.

Les branches latérales 52 présentent une longueur comprise entre 20 et 40 mm, de préférence 30 mm, de manière à déporter vers l'avant (en référence à l'axe X du repère orthogonal (X, Y, Z)) la lentille de projection 5. Un tel décalage vers l'avant apporte au module optique 3, un effet esthétique « flottant ». L'extrémité arrière de chaque branche latérale 52, c'est-à-dire l'extrémité de la branche latérale 52 opposée à la face avant 51 comprend en outre un chanfrein 521, de manière à permettre le glissement de chaque branche latérale 52 sur les facettes avant 421 et arrière 422 de chaque plot de fixation 42, lors de l'insertion de la lentille de projection 5 sur le corps principal 4, comme cela est également représenté sur la figure 5.

Selon une forme de réalisation préférée de l'invention, toujours en référence à la figure 7, chaque branche latérale 52 comprend en outre un orifice de fixation 520, par exemple de forme quadrilatérale, adapté pour coopérer avec les plots de fixation 42 du corps principal 4. De tels orifices de fixation 520 sont ainsi configurés pour s'insérer autour des plots de fixation 42, permettant ainsi la fixation de la lentille de projection 5 sur le corps principal 4. Dans cet exemple, les orifices de fixation 520 sont de forme quadrilatérale, de manière à coopérer avec les plots de fixation 42 présentant une forme pyramidale à quatre côté, cependant il va de soi que les orifices de fixation 520 pourraient présenter une forme différente si les plots de fixation 42 présentaient également une forme différente. A titre d'exemple, les plots de fixation 42 pourraient être de forme pyramidale à trois côtés, auquel cas les orifices de fixation 52 présenteraient une forme triangulaire.

Les deux branches latérales 52 comprenant chacune un orifice de fixation 520, adapté pour coopérer avec l'un des deux plots de fixation 42 du corps principal 4, permettent avantageusement une fixation en deux points opposés de la lentille de projection 5 sur le corps principal 4, permettant ainsi de bloquer la lentille de projection 5 en translation suivant l'avant longitudinal X du module optique 3.

De préférence, la lentille de projection 5 comprend également une patte de maintien 53, adaptée pour coopérer avec l'encoche 43 du corps principal 4. Une telle patte de maintien 53, intégrée à la lentille de projection 5, s'étend dans un plan sécant à la fois au plan de diffusion P₅₁ et aux plans de branches P_{52A}, P_{52B}, c'est-à-dire selon un plan sensiblement horizontal, lorsque le module optique 3 est monté dans le dispositif d'éclairage 2. La patte de maintien 53 s'étend ainsi en parti inférieure de la lentille de projection 5, de manière à s'insérer dans l'encoche 43, intégrée à la surface inférieure du corps principal 4, comme représenté sur la figure 8. La patte de maintien 53, présentant la forme d'un « V », est ainsi configurée pour être mise en contrainte lors de son insertion dans l'encoche 43, c'est-à-dire lors de la fixation de la lentille de projection 5 sur le corps principal 4.

Dans cet exemple, l'encoche 43 et la patte de fixation 53 présentent une forme de « V », cependant il va de soi qu'ils pourraient présenter une forme différente, tant que la patte de fixation 53 est mise en contrainte dans l'encoche 43. Une telle mise en contrainte, permet avantageusement de bloquer la lentille de projection 5 en rotation, permettant de limiter les risques d'endommagement dus aux vibrations du véhicule 1 par exemple.

Un tel module optique 3 permet d'assurer une fixation rigide de la lentille de projection 5 sur le corps principal 4, tout en minimisant les effets des vibrations du véhicule 1. Un tel module optique 3 confère également à la lentille de projection 5 un effet flottant d'une lentille en sustentation, tout en permettant une fixation esthétique, simple et rapide de la lentille de projection 5 sur le corps principal 4.

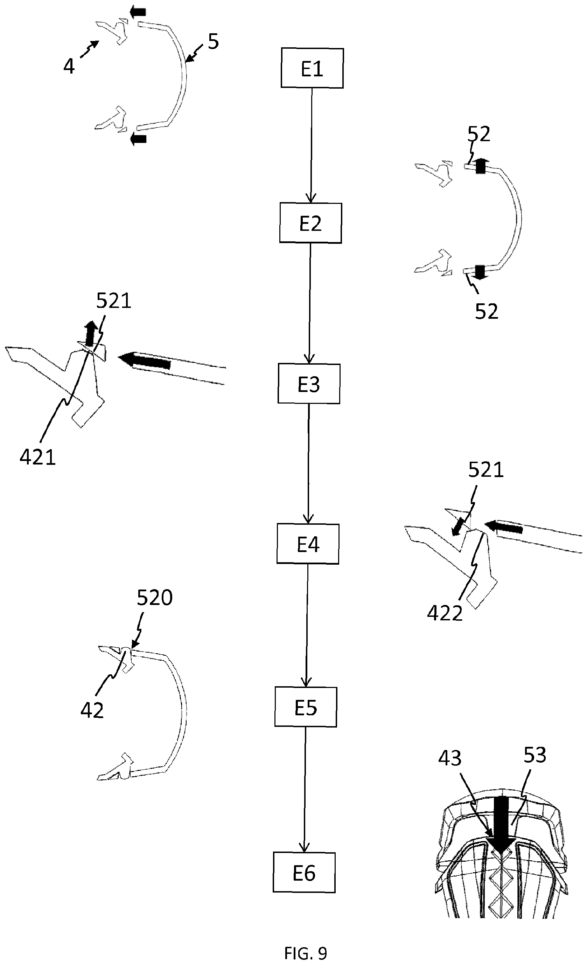

Il va dorénavant être présenté un procédé de fixation d'une lentille de projection 5 sur un corps principal 4 d'un module optique 3, selon un mode de réalisation préféré de l'invention, en référence à la figure 9.

Le procédé comprend tout d'abord, une étape E1 de positionnement de la lentille de projection 5 en vis-à-vis du corps principal 4. La lentille de projection 5 est ainsi translatée horizontalement (selon l'axe longitudinal du module optique 3) de manière à approcher les deux branches latérales 52 des plots de fixation 42.

Le chanfrein 521 de chaque branche latérale 52 coulisse alors sur les plots de fixation 52, générant l'écartement des branches latérales 52 l'une par rapport à l'autre dans une étape E2. La translation de la lentille de projection 5 selon l'axe X longitudinal entraine alors le glissement du chanfrein 521 de chaque branche latérale 52 sur chaque facette avant 421 du sommet 420 de chaque plot de fixation 42, dans une étape E3, puis le glissement du chanfrein 521 de chaque branche latérale 52 sur chaque facette arrière 422 du sommet 420 de chaque plot de fixation 42, dans une étape E4, de manière à permettre l'insertion des plots de fixation 42, dans une étape E5, dans les orifices de fixation 520 des branches latérales 52.

La patte de maintien 53 est alors insérée dans une étape E6 dans l'encoche 43 du corps principal 4. Une telle patte de maintien 53 est ainsi mise en contrainte, de manière à bloquer toute rotation de la lentille de projection 5. Lorsque les plots de fixation 42 sont insérés dans les orifices de fixation 52 et que la patte de maintien 53 est contrainte dans l'encoche 43, la lentille de projection 5 est alors avantageusement fixée de manière rigide au corps principal 4.

Un tel procédé de fixation est simple à effectuer, permettant avantageusement une fixation rapide et sans effort de la lentille de projection 5 sur le corps principal 4 du module optique 3.

## Revendications

1. Module optique (3) pour dispositif d'éclairage et/ou de signalisation lumineuse (2) de véhicule (1), notamment de véhicule (1) automobile, ledit module optique (3) comprenant un corps principal (4) configuré pour recevoir une source lumineuse, et une lentille de projection (5), ladite lentille de projection (5) comprenant une face avant (51), apte à permettre la diffusion d'une lumière émise par ladite source lumineuse vers l'extérieur du véhicule (1) et s'étendant sensiblement selon un plan de diffusion (P₅₁), et au moins une branche latérale (52), s'étendant selon un plan de branche (P52) sécant audit plan de diffusion (P₅₁) et comprenant un orifice de fixation (520), ledit corps principal (4) comprenant au moins un plot de fixation (42) faisant saillie dudit corps principal (4), **caractérisé en ce que** ledit plot de fixation (42) présente une forme pyramidale s'étendant d'une base (41) à un sommet (420), ledit sommet (420) comprenant au moins deux facettes (421, 422) configurées pour assurer le guidage de ladite lentille de projection (5) sur le corps principal (4) et pour permettre la fixation de la lentille de projection (5) au corps principal (4).

2. Module optique (3) selon la revendication précédente, dans lequel ladite au moins une branche latérale (52) présente une longueur comprise entre 20 mm et 40 mm, de préférence 30 mm.

3. Module optique (3) selon l'une des revendications précédentes, dans lequel le corps principal (4) comprenant deux plots de fixation (42), ladite lentille de projection (5) comprend deux branches latérales (52) comprenant chacune un orifice de fixation (520).

4. Module optique (3) selon l'une des revendications précédentes, dans lequel, ledit corps principal (4) présentant un plan d'appui (P₄), le sommet (420) dudit au moins un plot de fixation (42) comprend une facette avant (421) et une facette arrière (422) présentant respectivement un premier angle (α) d'inclinaison par rapport audit plan d'appui (P₄) compris entre 5 ° et 15 ° et un deuxième angle (β) d'inclinaison par rapport audit plan d'appui (P₄) compris entre 35 ° et 45 °, de manière à assurer le guidage de la lentille de projection (5) sur le corps principal (4).

5. Module optique (3) selon l'une des revendications précédentes, dans lequel ledit au moins un plot de fixation (42) présente une forme pyramidale à quatre côtés.

6. Module optique (3) selon l'une des revendications précédentes, dans lequel, le corps principal (4) comprenant une encoche (43), la lentille de projection (5) comprend en outre une patte de maintien (53), configurée pour s'insérer dans ladite encoche (43).

7. Module optique (3) selon l'une des revendications précédentes, dans lequel ladite au moins une branche latérale (52) comprend une extrémité présentant un chanfrein (521).

8. Dispositif d'éclairage et/ou de signalisation lumineuse (2) comprenant un module optique (3) selon l'une des revendications précédentes.

9. Véhicule (1) automobile comprenant un dispositif d'éclairage et/ou de signalisation lumineuse (2) selon la revendication 8.

10. Procédé de fixation d'une lentille de projection (5) sur un corps principal (4) d'un module optique (3) d'un dispositif d'éclairage et/ou de signalisation lumineuse (2), ledit corps principal (4) comprenant au moins un plot de fixation (42), ladite lentille de projection (5) comprenant au moins une branche latérale (52), comprenant un orifice de fixation (520) et un chanfrein (521), et une patte de maintien (53), ledit procédé comprenant les étapes de :
- coulissement (E1) de ladite au moins une branche latérale (52) le long dudit corps principal (4),
- écartement (E2) de ladite au moins une branche latérale (52) sur ledit au moins plot de fixation (42),
- glissement (E3) dudit chanfrein (521) sur une facette avant (421) du sommet (420) du plot de fixation (42),
- glissement (E4) du chanfrein (521) sur une facette arrière (422) du sommet (420) du plot de fixation (42),
- insertion (E5) dudit au moins un plot de fixation (42) dans ledit orifice de fixation (420) de ladite au moins une branche latérale (52), et
- insertion (E6) de ladite patte de maintien (53) dans une encoche (43) du corps principal (4).

## Patentansprüche

1. Optisches Modul (3) für Beleuchtungs- und/oder Leuchtsignalisierungsvorrichtung (2) eines Fahrzeugs (1), insbesondere eines Kraftfahrzeugs (1), wobei das optische Modul (3) einen Hauptkörper (4) umfasst, der konfiguriert ist, um eine Lichtquelle aufzunehmen, und eine Projektionslinse (5), wobei die Projektionslinse (5) eine Vorderseite (51) umfasst, die geeignet ist, das Diffundieren eines Lichts, das von der Lichtquelle abgegeben wird, zum Äußeren des Fahrzeugs (1) zu erlauben, und die sich im Wesentlichen entlang einer Diffusionsebene (P₅₁) erstreckt, und mindestens einen Seitenzweig (52), der sich entlang einer Zweigebene (P₅₂), die die Diffusionsebene (P₅₁) schneidet, erstreckt und eine Befestigungsöffnung (520) umfasst, wobei der Hauptkörper (4) mindestens ein Befestigungselement (42) umfasst, das aus dem Hauptkörper (4) vorragt, **dadurch gekennzeichnet, dass** das Befestigungselement (42) eine Pyramidenform aufweist, die sich von einer Basis (41) zu einem Gipfel (420) erstreckt, wobei der Gipfel (420) mindestens zwei Facetten (421, 422) umfasst, die konfiguriert sind, um die Führung der Projektionslinse (5) auf dem Hauptkörper (4) sicherzustellen und um die Befestigung der Projektionslinse (5) auf dem Hauptkörper (4) zu erlauben.

2. Optisches Modul (3) nach dem vorstehenden Anspruch, wobei der mindestens eine Seitenzweig (52) eine Länge zwischen 20 mm und 40 mm, vorzugsweise 30 mm aufweist.

3. Optisches Modul (3) nach einem der vorstehenden Ansprüche, wobei der Hauptkörper (4) zwei Befestigungselemente (42) umfasst, wobei die Projektionslinse (5) zwei Seitenzweige (52) umfasst, die jeweils eine Befestigungsöffnung (520) umfassen.

4. Optisches Modul (3) nach einem der vorstehenden Ansprüche, wobei der Hauptkörper (4) eine Auflagefläche (P₄) aufweist, der Scheitel (420) des mindestens einen Befestigungselements (42) eine vordere Facette (421) und eine hintere Facette (422) umfasst, die jeweils einen ersten Neigungswinkel (α) in Bezug auf die Auflageebene (P₄) aufweisen, der zwischen 5° und 15° liegt, und einen zweiten Neigungswinkel (β) in Bezug auf die Auflageebene (P₄), der zwischen 35° und 45° liegt, so dass die Führung der Projektionslinse (5) auf dem Hauptkörper (4) sichergestellt ist.

5. Optisches Modul (3) nach einem der vorstehenden Ansprüche, wobei das mindestens eine Befestigungselement (42) eine Pyramidenform mit vier Seiten aufweist.

6. Optisches Modul (3) nach einem der vorstehenden Ansprüche, wobei der Hauptkörper (4) eine Kerbe (43) umfasst, die Projektionslinse (5) außerdem eine Haltepratze (53), die konfiguriert ist, um sich in die Kerbe (43) zu fügen, umfasst.

7. Optisches Modul (3) nach einem der vorstehenden Ansprüche, wobei der mindestens eine Seitenzweig (52) ein Ende umfasst, das eine Abfasung (521) aufweist.

8. Beleuchtungs- und/oder Leuchtsignalisierungsvorrichtung (2), die ein optisches Modul (3) nach einem der vorstehenden Ansprüche umfasst.

9. Kraftfahrzeug (1), das eine Beleuchtungs- und/oder Leuchtsignalisierungsvorrichtung (2) nach Anspruch 8 umfasst.

10. Verfahren zum Befestigen einer Projektionslinse (5) auf einem Hauptkörper (4) eines optischen Moduls (3) einer Beleuchtungs- und/oder Leuchtsignalisierungsvorrichtung (2), wobei der Körper (4) mindestens ein Befestigungselement (42) umfasst, wobei die Projektionslinse (5) mindestens einen Seitenzweig (52) umfasst, der eine Befestigungsöffnung (520) und eine Abfasung (521) sowie eine Haltepratze (53) umfasst, wobei das Verfahren die folgenden Schritte umfasst:
- Schieben (E1) des mindestens einen Seitenzweigs (52) entlang des Hauptkörpers (4),
- Abspreizen (E2) des mindestens einen Seitenzweigs (52) auf dem mindestens einen Befestigungselement (42),
- Gleiten (E3) der Abfasung (521) auf der vorderen Facette (421) des Gipfels (420) des Befestigungselements (42),
- Gleiten (E4) der Abfasung (521) auf einer hinteren Facette (422) des Gipfels (420) des Befestigungselements (42),
- Einfügen (E5) des mindestens einen Befestigungselements (42) in die Befestigungsöffnung (420) des mindestens einen Seitenzweigs (52), und
- Einfügen (E6) der Haltepratze (53) in eine Kerbe (43) des Hauptkörpers (4).

## Claims

1. An optical module (3) for a lighting and/or signalling device (2) of a vehicle (1), in particular of a motor vehicle (1), said optical module (3) including a main body (4) configured to receive a light source, and a projection lens (5), said projection lens (5) including a front face (51), able to permit the diffusion of a light emitted by said light source towards the exterior of the vehicle (1) and extending substantially along a diffusion plane (P₅₁), and at least one lateral branch (52), extending along a branch plane (P₅₂) secant to said diffusion plane (P₅₁) and including an attachment orifice (520), said main body (4) including at least one attachment stud (42) projecting from said main body (4), **characterized in that** said attachment stud (42) has a pyramidal shape extending from a base (41) to an apex (42), said apex (420) including at least two facets (421, 422) configured to ensure the guidance of said projection lens (5) on the main body (4) and to permit the attaching of the projection lens (5) to the main body (4) .

2. The optical module (3) according to the preceding claim, in which said at least one lateral branch (52) has a length comprised between 20 mm and 40 mmm, preferably 30 mm.

3. The optical module (3) according to one of the preceding claims, in which the main body (4) including two attachment studs (42), said projection lens (5) includes two lateral branches (52) each including an attachment orifice (520).

4. The optical module (3) according to one of the preceding claims, in which, said main body (4) having a support plane (P₄), the apex (420) of said at least one attachment stud (42) includes a front facet (421) and a rear facet (422) having respectively a first angle (α) of inclination with respect to said support plane (P₄) comprised between 5° and 15° and a second angle (β) of inclination with respect to said support plane (P₄) comprised between 35° and 45°, so as to ensure the guidance of the projection lens (5) on the main body (4).

5. The optical module (3) according to one of the preceding claims, in which said at least one attachment stud (42) has a pyramidal shape with four sides.

6. The optical module (3) according to one of the preceding claims, in which, the main body (4) including a notch (43), the projection lens (5) further includes a retaining tab (53), configured to be inserted in said notch (43).

7. The optical module (3) according to one of the preceding claims, in which said at least one lateral branch (52) includes an end having a chamfer (521).

8. A lighting and/or signalling device (2) including an optical module (3) according to one of the preceding claims.

9. A motor vehicle (1) including a lighting and/or signalling device (2) according to Claim 8.

10. A method for attaching a projection lens (5) on a main body (4) of an optical module (3) of a lighting and/or signalling device (2), said main body (4) including at least one attachment stud (42), said projection lens (5) including at least one lateral branch (52), including an attachment orifice (520) and a chamfer (521), and a retaining tab (53), said method including the steps of:
- displacing (E1) of said at least one lateral branch (52) along said main body (4),
- moving apart (E2) of said at least one lateral branch (52) on said at least one attachment stud (42),
- sliding (E3) of said chamfer (521) on a front facet (421) of the apex (420) of the attachment stud (42),
- sliding (E4) of the chamfer (521) on a rear facet (422) of the apex (420) of the attachment stud (42),
- insertion (E5) of said at least one attachment stud (42) in said attachment orifice (420) of said at least one lateral branch (52), and
- insertion (E6) of said retaining tab (53) in a notch (43) of the main body (4).
